# EUROPEAN PATENT SPECIFICATION

(11) **EP 3 452 869 B1**
(45) Date of publication and mention of the grant of the patent: **02.07.2025**
(21) Application number: 16728729.1
(22) Date of filing: 05.05.2016
(51) Int. Cl.: G02C 1/00, G02C 7/02

(54) **METHOD OF PRODUCTION OF EYEGLASS LENS AND EYEGLASS FRAME**
VERFAHREN ZUR HERSTELLUNG EINES BRILLENGLASES UND EINES BRILLENGESTELLS
MÉTHODE DE PRODUCTION DE VERRES DE LUNETTES ET DE MONTURES DE LUNETTES

(43) Date of publication of application: 13.03.2019
(73) Proprietor: De Angelis, Marco, 47522 Cesena (IT)
(72) Inventor: De Angelis, Marco, 47522 Cesena (IT)
(74) Representative: Minghetti, Mauro
(86) International application number: PCT/IB2016/052559
(87) International publication number: WO 2017/191493

(56) References cited:
- WO-A2-2008/010860
- JP-A- H0 213 921
- JP-U- S53 148 647
- KR-U- 20090 012 884
- US-A- 5 708 489
- US-B2- 8 083 572

## Description

### TECHNICAL FIELD OF THE INVENTION

The present invention concerns a method of production of an eyeglass lens.

In greater detail, the present invention concerns the production of an eyeglass lens with minimal retinal projection. Another object of the present invention is a method of production of an eyeglass frame with minimal retinal projection.

### STATE OF THE ART

In the field of the production of eyeglasses one of the most pursued trends currently relates to the manufacture of frameless eyeglasses, also known as rimless, or eyeglasses with partial frame, i.e. provided only in the upper part of the lenses or reduced to a minimal connection support for example of the screw, interlocking, inclusion type, etc..

Such a trend is essentially to meet aesthetic needs - to alter the facial features as little as possible - or, or also, to meet technical requirements, in the sense that such eyeglasses have a much lower weight with respect to glasses with a conventional frame, and therefore ensure a greater feeling of comfort for those wearing them.

As stated, frameless eyeglasses, or eyeglasses with upper or reduced frame, offer the user better sensations not only in terms of the weight of the object, but also in terms of the invasiveness in the visual field of the user.

The normal frame, indeed, however thin or transparent, still has a certain thickness that is clearly perceived by the user even simply in a situation of central vision. A document dealing with a similar problem when looking through the edge of an eyeglass lens is WO2008010860A2.

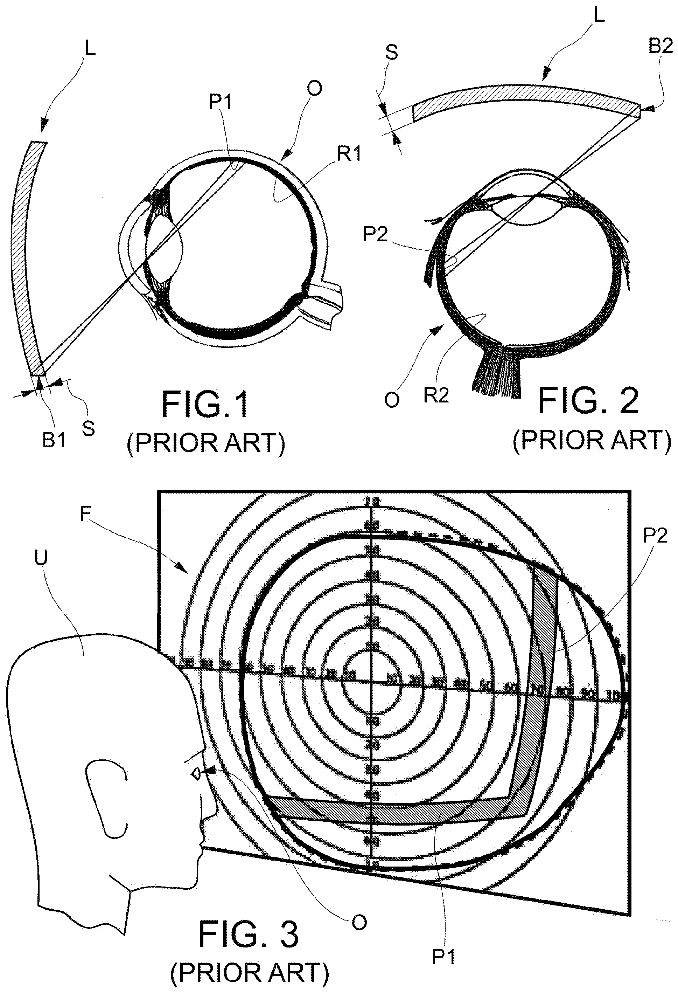

Currently, the edge of the lenses used without a frame, or without a lower and/or side frame, is approximately perpendicular to the two larger surfaces of the lenses. The attached figure 1 and figure 2 respectively refer to a sagittal section - with lateral point of view - and to a horizontal section - with point of view from above - of a human eye O and of a respective lens L without frame, or with reduced frame, of the known type.

Frameless eyeglass lenses, whatever type they are - for correction of sight defects and/or sunglasses - have an edge B1,B2 of a certain thickness S over the entire perimeter.

Such an edge B1,B2 is in the visual field, so that its projection P1,P2 on the retina R1,R2 makes it constantly perceivable especially as far as the lower and side profile are concerned, and this can be annoying even in the case of central vision.

In particular, figure 1 illustrates the projection P1 of the lower edge B1 of the lens L on the upper retina R1 of the eye O; figure 2, on the other hand illustrates the projection P2 of the side edge B2 of the lens L on the nasal retina R2 of the eye O. In the case in which the vision is not central, but lateral or lower, the perception is even greater and therefore even more annoying.

It must also be considered that the edges B1,B2 are also capable of reflecting at least a part of the light that hits them.

For example, in the case in which the light hits the user from above, the lower edge B1 also reflects at least a part of the radiation towards the upper retina R1: this phenomenon can of course also generate annoying sensations for the user.

Figure 3, on the other hand, illustrates, totally schematically and for the sole purpose of better understanding, the visual field F, for example, of the right eye O of the user U, wherein the projections P1,P2 respectively of the lower and side edges B1,B2 of the lens L are highlighted: as can be seen, such projections P1,P2 clearly have a certain non-negligible thickness, which is clearly perceived by the user U also in the case of central vision.

The considerations outlined above are even more important in the case of all users - both adults and children - that are forced, due to sight defects, to wear eyeglasses for the first time: for such users the discomfort caused by the presence, in the visual field, of the projections of the edges of the lenses on the retina can be substantial and have a negative impact.

The considerations outlined above regarding lenses are also entirely valid for eyeglass frames, with particular reference to eyeglasses with a whole or partial frame.

Indeed, the normal eyeglass frame, even if in some cases it can be made thin and/or transparent, still has a certain thickness that is clearly perceived by the user even simply in a situation of central vision.

Currently, the shape of eyeglass frames, with an approximately symmetrical front and rear shape, has a certain non-negligible thickness that follows the profile of the lens, with front and rear uprights approximately perpendicular to the edge of the lens.

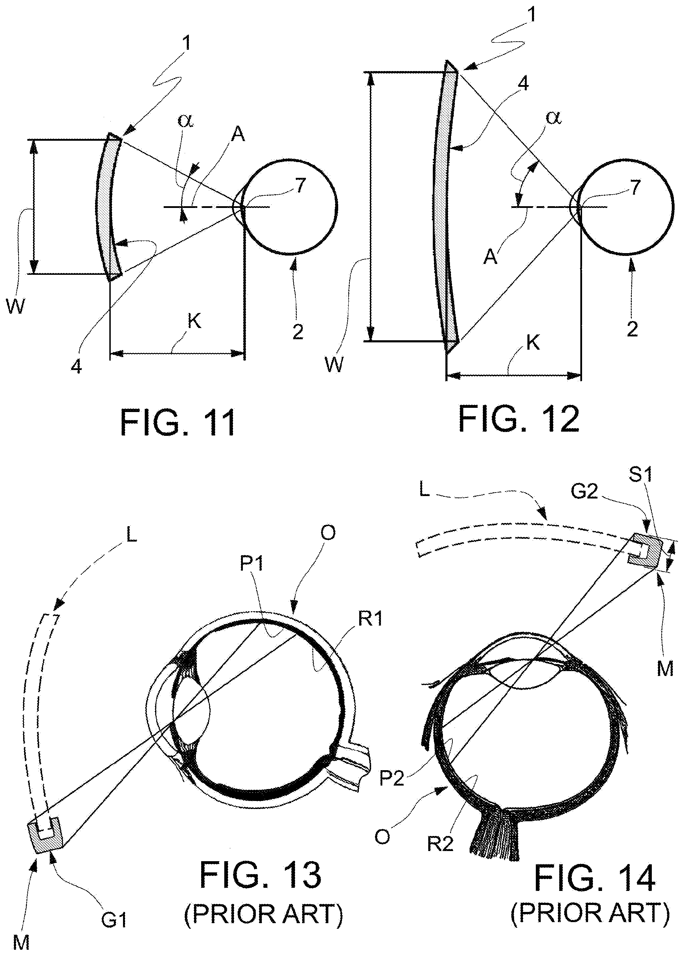

The attached figure 13 and figure 14 respectively refer to a sagittal section - with lateral point of view - and to a horizontal section - with point of view from above - of a human eye O and of a respective lens L with frame M, of the known type.

Eyeglass frames M - whatever type they may be, i.e. partial or complete, and whatever type the eyeglasses also might be - have, for each lens L, at least one lower segment G1 and at least one side segment G2 having a certain thickness S1. Such segments G1,G2 are in the visual field, so that their projections P1,P2 on the retina R1,R2 make the frame M constantly perceptible, and as stated this can be annoying even in the case of central vision.

In the case in which the vision is lateral or lower, the perception is even greater, and therefore even more annoying.

In particular, figure 13 illustrates the projection P1 of the lower segment G1 of the frame M on the upper retina R1 of the eye O; figure 14, on the other hand, illustrates the projection P2 of the side segment G2 of the frame M on the nasal retina R2 of the eye O.

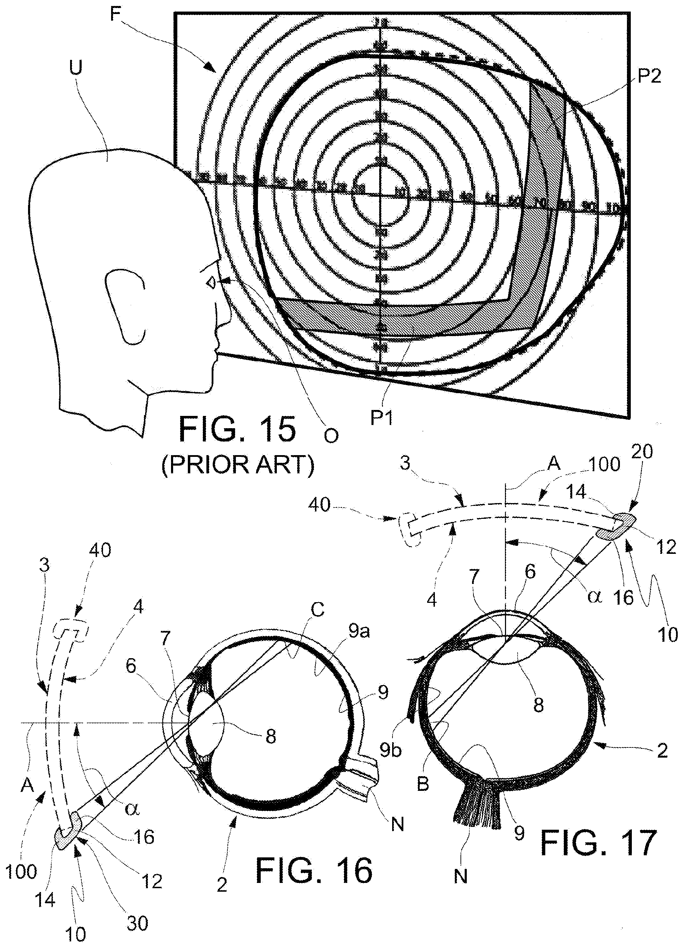

Figure 15, on the other hand, illustrates, totally schematically and for the sole purpose of better understanding, the visual field F, for example, of the right eye O of the user U, wherein the projections P1,P2 respectively of the lower and side segments G1,G2 of the frame M are highlighted: as can be seen, such projections P1,P2 clearly have a certain non-negligible thickness, which as stated is clearly perceived by the user even in the case of central vision.

### PURPOSES OF THE INVENTION

The task of the present invention is to improve the state of the art.

In such a task, a purpose of the present invention is to make an eyeglass lens, both for the correction of sight defects and for sunglasses, which allows the sensation of annoyance due to the presence of the projections of the edges on the retina of the eye, which encroach on the visual field, to be reduced.

Yet another purpose of the present invention is to make an eyeglass lens that allows such a result to be obtained through a technically simple and low-cost solution.

This task and these purposes are accomplished by the eyeglass lens according to the attached claim 1.

The eyeglass lens produced according to the invention comprises an outer surface, an inner surface, and a perimeter edge.

The perimeter edge comprises at least one upper portion, and/or at least one lower portion and/or at least one outer side portion and/or at least one inner side portion; it is also foreseen for there to be an optical axis of the lens that joins the centres of curvature of the outer and inner surfaces.

According to the invention, in any section plane passing through such an optical axis, at least one from the outer side portion, the inner side portion, the upper portion and the lower portion of the perimeter edge of the lens is inclined, with respect to the optical axis, by a predetermined acute angle.

The predetermined acute angle is selected so as to minimise the extension in width of at least one of the projections of the portions on the retina of the eye of the user in a condition of central or substantially central vision.

Moreover, this task and these purposes are accomplished by the eyeglass frame according to the attached claim 11.

The dependent claims refer to preferred and advantageous embodiments of the invention.

### BRIEF DESCRIPTION OF THE DRAWINGS

The characteristics of the invention will become clearer to those skilled in the art from the following description and from the attached tables of drawings, given as a non-limiting example, in which:
figure 1 is a sagittal section of a human eye with an eyeglass lens according to the current state of the art;
figure 2 is a horizontal section of the human eye and of the lens of the previous figure 1;
figure 3 is a schematic perspective view of the visual field of the right eye of a user wearing eyeglasses with lenses according to the current state of the art, according to the previous figures 1,2;
figure 4 is a sagittal section of a human eye with an eyeglass lens according to the present invention;
figure 5 is a horizontal section of the human eye and of the lens according to the present invention;
figure 6 is a schematic perspective view of the visual field of the right eye of a user wearing eyeglasses with lenses according to the present invention;
figure 7 is a sagittal section of a human eye with an eyeglass lens according to another embodiment of the present invention;
figure 8 is a horizontal section of the human eye and of the lens of the previous figure 7;
figure 9 is a schematic horizontal section of the human eye and of the lens according to the invention;
figure 10 is a schematic horizontal section of the human eye and of the lens according to the invention, in another embodiment;
figure 11 is a schematic horizontal section of the human eye and of the lens according to the invention, in yet another embodiment;
figure 12 is a schematic horizontal section of the human eye and of the lens according to the invention, in a further embodiment;
figure 13 is a sagittal section of a human eye with an eyeglass lens with frame according to the current state of the art;
figure 14 is a horizontal section of the human eye and of the lens with frame of the previous figure 13;
figure 15 is a schematic perspective view of the visual field of the right eye of a user wearing eyeglasses with frame according to the current state of the art, according to the previous figures 13,14;
figure 16 is a sagittal section of a human eye with an eyeglass lens with frame according to the present invention;
figure 17 is a horizontal section of the human eye and of the lens with frame according to the present invention;
figure 18 is a schematic perspective view of the visual field of the right eye of a user wearing eyeglasses with frame according to the present invention;
figure 19 is a schematic horizontal section of the human eye and of the lens with frame according to the invention;
figure 20 is a schematic horizontal section of the human eye and of the lens with frame according to the invention, in another embodiment;
figure 21 is a schematic horizontal section of the human eye and of the lens with frame according to the invention, in yet another embodiment;
figure 22 is a schematic horizontal section of the human eye and of the lens with frame according to the invention, in a further embodiment.

### EMBODIMENTS OF THE INVENTION

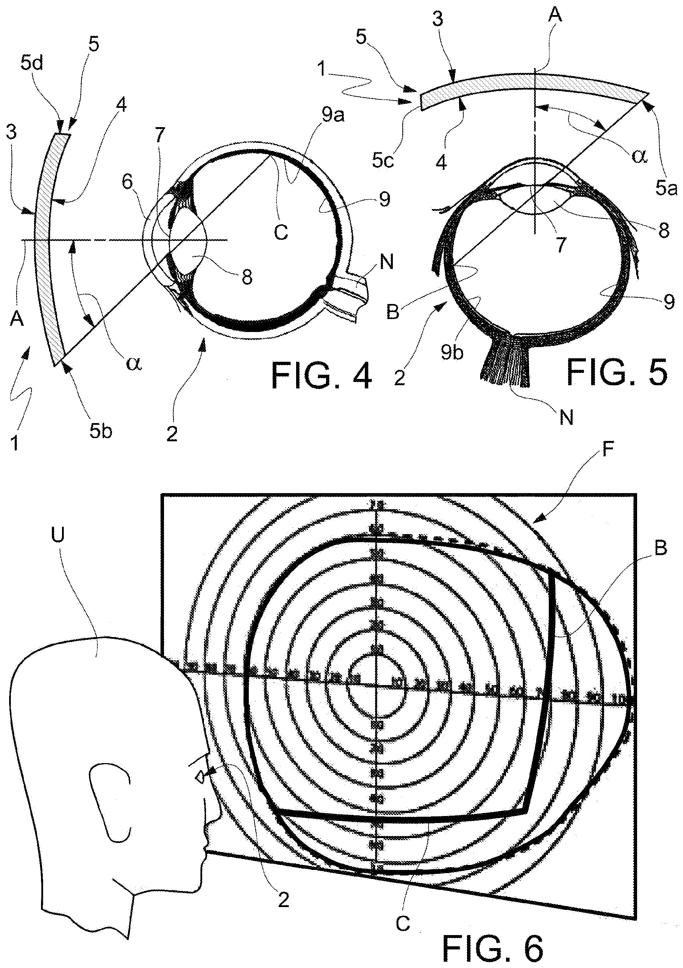

With reference to the attached figures 4,5, an eyeglass lens produced according to the present invention is wholly indicated with 1.

The lens 1, in the aforementioned figures, is illustrated associated with a respective human eye 2, for example the right eye.

The lens 1 can be of any shape and size, and comprises an outer surface 3 and an inner surface 4.

The outer surface 3 and the inner surface 4 are suitably curved in relation to the specific application requirements.

The lens 1 also comprises a perimeter edge wholly indicated with 5.

For the purposes of better understanding, the perimeter edge 5 of the lens 1 can ideally be divided into many consecutive segments.

In this sense, the perimeter edge 5 comprises at least one outer side portion 5a and/or at least one inner side portion 5c - visible in figure 5 - and/or at least one upper portion 5d and/or at least one lower portion 5b, visible in figure 4.

It should be emphasised that it is an absolutely ideal sub-division carried out purely for illustrative and clarifying purposes, and that it does not necessarily correspond to a physical distinction between the various portions of the perimeter edge 5: indeed, the latter can be shaped so as to define a closed line, for example circular, elliptical or of other similar shapes, perfectly joined and/or without corners.

The lens 1 defines an optical axis A.

The optical axis A consists of the line that joins the centres of curvature of the outer surface 3 and of the inner surface 4 of the lens 1 itself.

In the human eye 2 represented in figures 4,5 it is, moreover, possible to identify the cornea 6, the pupil 7, the lens 8, the retina 9 and the optical nerve N.

In particular, the inner surface of the retina 9 comprises an upper portion called upper retina 9a, and a side portion called nasal retina 9b.

According to an aspect of the present invention, and with reference to the aforementioned figures 4 and 5, in any section plane passing through the optical axis A, at least one from the outer side portion 5a, the inner side portion 5c and the lower portion 5b of the perimeter edge 5 of the lens 1 is inclined, with respect to the aforementioned optical axis A, by a predetermined angle α.

In greater detail, in any section plane passing through the optical axis A, both at least one from the outer side portion 5a and the inner side portion 5c, and the lower portion 5b of the perimeter edge 5 of the lens 1 are inclined, with respect to the aforementioned optical axis A, by a predetermined acute angle α.

As already stated, such a characteristic is visible and identifiable, with regard to the lower portion 5b, in figure 4, in which the section plane passing through the optical axis A is sagittal; such a characteristic is also visible and identifiable, with regard to at least one from the outer side portion 5a and the inner side portion 5c, in figure 5, in which the section plane passing through the optical axis A, on the other hand, is horizontal.

In the particular embodiment of the finding of figures 4,5, of the side portions 5a,5c of the perimeter profile 5 of the lens 1, only the outer side portion 5a, in addition to the lower one 5b, is inclined - with respect to the optical axis A and in any section plane passing through it - by the aforementioned predetermined acute angle α with respect to the optical axis A itself.

This is clearly a consequence of the fact that the shape of the normal visual field of the eye is not symmetrical with respect to the central visual axis, but oblong towards the outside or towards the bottom, thus often including the side and/or lower edge of the lenses in common use.

As can clearly be worked out by observing the quoted figures 4 and 5 and also figure 6, the solution according to the present invention makes it possible to minimise the size - in particular the extension in width - of the projection B of the side portion 5a of the perimeter edge 5, and of the projection C of the lower portion 5b of the same perimeter edge 5 in a condition of central or substantially central vision.

According to another aspect of the invention it has been determined, based on both theoretical and experimental considerations, that the aforementioned predetermined acute angle α can be preferably comprised between 25° and 80°.

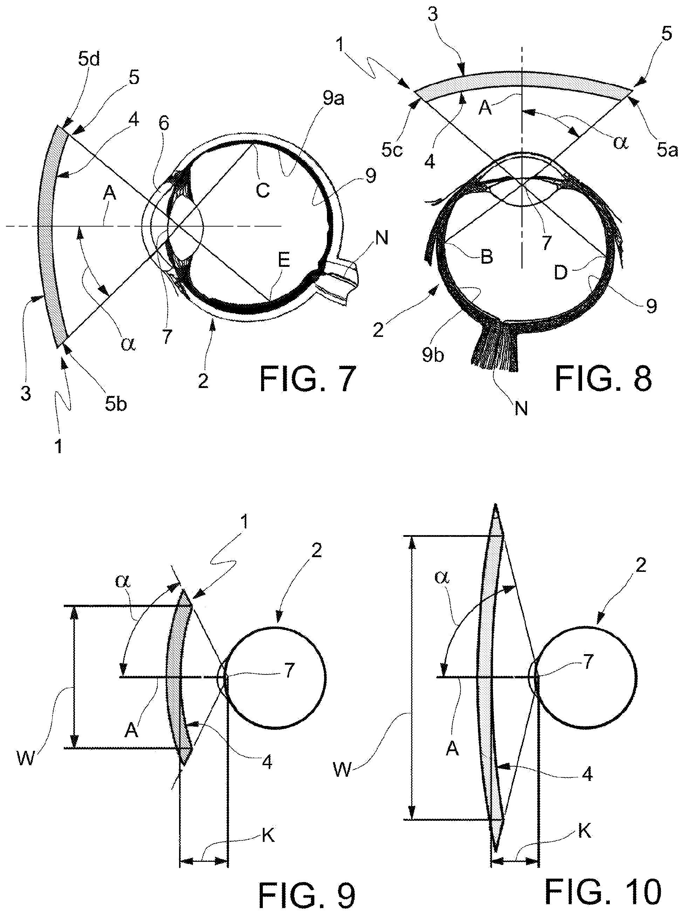

The variability of the aforementioned angle α depends mainly on two factors, i.e.: the size of the lens 1;
the distance K of the inner surface 4 of the lens 1 from the centre of the pupil 7 (see in particular figures 9-12).

A suitable selection of the predetermined acute angle α, in relation to the size of the lens 1 and to the distance K of the inner surface 4 of the lens 1 with respect to the centre of the pupil 7, allows projections B,C to be obtained that, in the limit case of obtaining optimal conditions and again with reference to a condition of central or substantially central vision, reduce to simple lines that cross the visual field F, as illustrated in figure 6.

In another embodiment of the invention, illustrated in figures 7,8, both the outer side portion 5a and the inner side portion 5c of the perimeter edge 5 of the lens 1 are inclined - in any section plane passing through the optical axis A - by the aforementioned predetermined acute angle α with respect to the optical axis A itself.

Moreover, the lower portion 5b of the perimeter edge 5 is also inclined by the same predetermined acute angle α.

This is a further improved and more complete solution than the previous one, and therefore is capable of providing an even greater feeling of comfort for the user.

As can be observed, both the projection B of the outer side portion 5a of the perimeter edge 5, and the projection D of the inner side portion 5c have a minimised extension in width in conditions of central or substantially central vision.

Figure 7 also shows that, if so desired, the upper portion 5d of the perimeter edge 5, in the particular case of frameless lenses, can also be inclined, in a section plane passing through the optical axis A, by the same predetermined acute angle α with respect to the optical axis A itself, so as to generate a respective projection E of minimised extension in conditions of central or substantially central vision.

Figures 9-12 illustrate further embodiments of the invention.

Such embodiments differ from one another mainly for the size of the lenses 1 and for the distance K between the inner surface 4 of the lens 1 and the centre of the pupil 7.

For example, in the embodiment of figure 9, the distance K between the centre of the pupil 7 and the inner surface 4 of the lens 1 is 10 mm, whereas the width W of the lens 1 in a horizontal plane passing through the optical axis A of the lens 1 is 30 mm.

In such an embodiment, the predetermined acute angle α is 63.43°.

In the embodiment of figure 10, the distance K between the centre of the pupil 7 and the inner surface 4 of the lens 1 is always 10 mm, whereas the width W of the lens 1 in a horizontal plane passing through the optical axis A of the lens 1 is 60 mm.

In this other embodiment, the predetermined acute angle α is 75.96°.

In the embodiment of figure 11, the distance K between the centre of the pupil 7 and the inner surface 4 of the lens 1 is 30 mm, whereas the width W of the lens 1 in a horizontal plane passing through the optical axis A of the lens 1 is 30 mm.

In this other embodiment, the predetermined acute angle α is 28.61°.

In the embodiment of figure 12, finally, the distance K between the centre of the pupil 7 and the inner surface 4 of the lens 1 is 30 mm, whereas the width W of the lens 1 in a horizontal plane passing through the optical axis A of the lens 1 is 60 mm.

In this embodiment, the predetermined acute angle α is 47.49°.

The parameters given above are provided only illustrative and non-limiting examples.

The thickness of the lens according to the finding can be comprised between 0.5 mm and 15 mm.

It should also be specified that in the embodiments of figures 4,5,7-12 the shapes, sizes and dimensional proportions of the lenses represented are totally schematic, and do not necessarily correspond to the real ones.

The invention thus conceived makes it possible to obtain important technical advantages.

Thanks to the particular solution adopted, the projections on the retina of the eye of the side portions and/or of the lower portion of the perimeter edge of the lens, in a situation of central vision, are minimised in extension, and therefore in the visual field of the eye such projections have a minimal bulk, and in any case much smaller than that of known lenses.

Such a solution is therefore very comfortable for all users, and in particular for those who need to wear eyeglasses for the first time.

The result is obtained with provisions that are technically simple, cost-effective and within the capabilities of all manufacturers of eyeglass lenses, using production apparatuses that are already available.

The described solution is applicable both to eyesight lenses and to gradient sunglass lenses.

It should also be added that the thicker the lenses are, typically therefore eyesight lenses, the more annoying the perception of the edges thereof can be, and therefore the more advantageous the proposed solution is.

A frame 10 for eyeglasses according to the present invention is illustrated in figures 16,17.

The frame 10 is associated with a respective lens 100.

The lens 100 can be of any type, for example for eyesight or sunglasses, without particular limitations.

The lens 100 with the respective frame 10, in the aforementioned figures, is illustrated associated with a respective human eye 2, for example the right eye.

The lens 100 can be of any shape and size, and comprising an outer surface 3 and an inner surface 4.

The outer surface 3 and the inner surface 4 are suitably curved in relation to the specific needs of the user.

The lens 100 also comprises a perimeter edge 5, of any shape, at which the frame 10 is coupled.

The lens 100 can be of the type described earlier - and thus with characteristics according to the present invention - or even of another type.

The lens 100 defines an optical axis A, which consists of the line that joins the centres of curvature of the outer surface 3 and of the inner surface 4 of the lens 100 itself.

Since the frame 10 follows the profile of the lens 100, the aforementioned optical axis A can also be defined by the same frame 10, also in the absence of the lens 100.

The frame 10, in a section plane passing through the aforementioned optical axis A, has a substantially C-shaped section.

In greater detail, the section of the frame 10 comprises a flank 12, a front edge 14 and a rear edge 16.

For the sole purpose of better understanding, the frame 10 can be ideally divided into many consecutive portions.

In this sense, the frame 10 comprises at least one outer side segment 20 - visible in figure 17 - and at least one lower segment 30, visible in figure 16.

Each of the segments 20,30 is shaped in the way described above.

It should be emphasised that it is an absolutely ideal sub-division carried out purely for illustrative and clarifying purposes, and that it does not necessarily correspond to a physical distinction between the various segments of the frame 10: indeed, the latter can be shaped so as to define a closed line, for example circular, elliptical or of other similar shapes, perfectly joined and/or without corners.

According to the present invention, and with reference to the aforementioned figures 16,17, in any section plane passing through the optical axis A, the flank 12 of at least one from the outer side segment 20 and the lower segment 30 of the frame 10 is inclined, with respect to the aforementioned optical axis A, by a predetermined angle α.

In greater detail, in an embodiment of the invention of particular practical interest, in any section plane passing through the optical axis A, both the flank 12 of the outer side segment 20 and that of the lower segment 30 of the frame 10 are inclined, with respect to the aforementioned optical axis A, by a predetermined acute angle α.

As already stated, such a characteristic is visible and identifiable, as regards the lower segment 30, in figure 16, in which the section plane passing through the optical axis A is sagittal; such a characteristic is also visible and identifiable, as regards the outer side segment 20, in figure 17, in which the section plane passing through the optical axis A, on the other hand, is horizontal.

Observing the frame 10 in section, the front edge 14 and the rear edge 16 both of the outer side segment 20 and of the lower segment 30 can be inclined, with respect to the flank 12, by an angle which is complementary to the aforementioned predetermined acute angle α, or they can have respective different inclinations dictated by different geometric/constructive requirements.

In the particular embodiment of the invention of figures 16,17, the inner side segment 40 of the frame 10 is represented with a broken line, to signify that it could take up different configurations.

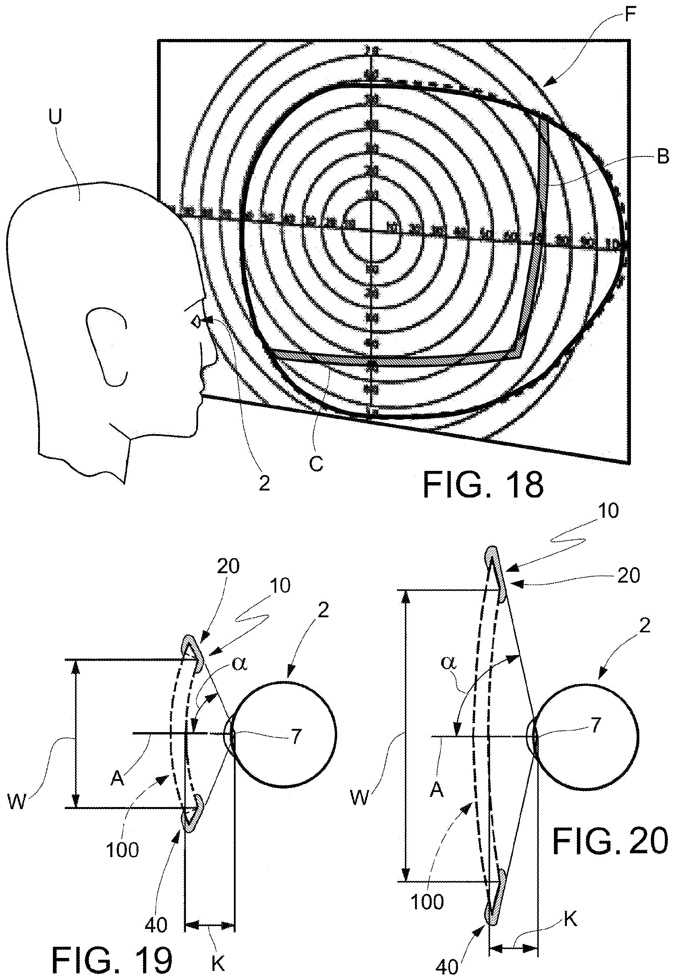

With particular reference to figure 18, indeed, it should be observed that the inner side segment 40, although normally always present, influences the visual field F of the eye 2 to a much lesser extent with respect to the outer side segment 20: consequently, the inner side segment 40 could be made both with essentially conventional configuration, and with the respective flank 12 inclined with respect to the optical axis A by a predetermined acute angle α in accordance with the present invention, and as will become clearer hereinafter.

As can be understood from observing the quoted figures 16 and 17, and also figure 18, the solution according to the present invention makes it possible to minimise the size - in particular the extension in width - at least of the projection B of the outer side segment 20 of the frame 10, and of the projection C of the lower segment 30 of the same frame 10 in a condition of central or substantially central vision.

As far as the acute angle α is concerned, the frame 10 possesses the same characteristics as the lens 1 produced according to the present invention.

If the inner side segment 40 of the frame 10 is also configured in an analogous manner to the outer side segment 30, the projection thereof on the retina 9 obviously also reduces to a strip having very limited extension in width.

The thickness of the frame 10 can be any: of course, a reduction thereof contributes to consequently reducing its projection on the retina 9 of the eye 2.

The material from which the frame 10 is made can be any.

The frame 10 can also have any appearance in relation to its colour, its surface quality, and/or in relation to other characteristics.

Figures 19-22 illustrate further embodiments of the frame 10 according to the invention.

Such embodiments differ from one another mainly for the size of the lenses 100, and therefore of the respective frames 10, and for the distance K between the inner surface 4 of the lens 100 and the centre of the pupil 7 of the eye 2.

For example, in the embodiment of figure 19, the distance K between the centre of the pupil 7 and the inner surface 4 of the lens 100 is 10 mm, whereas the width W of the lens 100 in a horizontal plane passing through the optical axis A of the lens 100 itself is 30 mm.

In such an embodiment, the predetermined acute angle α is 63.43°.

In the embodiment of figure 20, the distance K between the centre of the pupil 7 and the inner surface 4 of the lens 100 is always 10 mm, whereas the width W of the lens 100 in a horizontal plane passing through the optical axis A of the lens 100 itself is 60 mm.

In this other embodiment, the predetermined acute angle α is 75.96°.

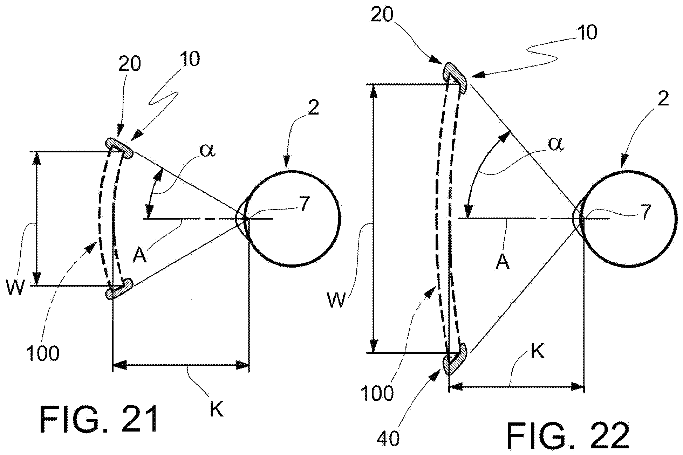

In the embodiment of figure 21, the distance K between the centre of the pupil 7 and the inner surface 4 of the lens 100 is 30 mm, whereas the width W of the lens 100 in a horizontal plane passing through the optical axis A of the lens 100 itself is 30 mm.

In this other embodiment, the predetermined acute angle α is 28.61°.

In the embodiment of figure 22, finally, the distance K between the centre of the pupil 7 and the inner surface 4 of the lens 100 is 30 mm, whereas the width W of the lens 100 in a horizontal plane passing through the optical axis A of the lens 100 itself is 60 mm.

In this other embodiment, the predetermined acute angle α is 47.49°.

The parameter given above are provided only an illustrative and non-limiting examples.

The thickness of the lens 100 can for example be comprised between 0.5 mm and 15 mm.

It should also be specified that in the embodiments of figures 16,17,19-22 the shapes, sizes and dimensional proportions of the lenses 100 and of the respective frames 10 represented are totally schematic, and do not necessarily correspond to the real ones.

In all of the illustrated embodiments, the lens 100 with which the frame 10 produced according to the invention can be associated can have any configuration compatible with the mounting of the frame 10 itself, without any limitation.

In some embodiments, the lens 100 can be configured so as to make the frame 10 according to the invention easier to mount.

The technical result is obtained with provisions that are technically simple, cost-effective and within the capabilities of all manufacturers of eyeglass frames, using production apparatuses that are already available.

The described frame solution can be associated both with sight lenses and with gradient sunglass lenses.

It should also be added that the thicker the lenses, typically therefore eyesight lenses, and consequently the frame associated with them, are, the more annoying the perception of the frame can be, and therefore the more advantageous the proposed solution is.

Another object of the present invention is eyeglasses comprising the lens 1 according to the present invention, and/or the frame 10 according to the present invention.

As can be imagined, the combination of a frame 10 and of a lens 1 both having the characteristics described above makes it possible to make and use, in particular, a frame 10 of maximum performance in terms of minimisation of the retinal projection thereof.

In other words, the coupling in a single object of a lens 1 and of a frame 10 according to the invention makes it possible to reduce to the minimum the surface of the section of the frame 10 itself, and consequently therefore also its retinal projection.

It has thus been seen how the invention achieves the proposed purposes.

The present invention has been described according to preferred embodiments, but equivalent variants can be devised without departing from the scope of protection offered by the following claims.

## Claims

1. Method of production of an eyeglass lens (1), comprising an outer surface (3), an inner surface (4), and a perimeter edge (5), said perimeter edge (5) comprising at least one lower portion (5b), and/or at least one outer side portion (5a) and/or at least one inner side portion (5c) and/or at least one upper portion (5d), wherein it is foreseen for there to be an optical axis (A) of the lens (1) that joins the centres of curvature of said outer surface (3) and inner surface (4) **characterised in that** in any section plane passing through said optical axis (A), at least one from said outer side portion (5a), inner side portion (5c), lower portion (5b) and upper portion (5d) of said perimeter edge (5) is inclined, with respect to said optical axis (A), by a predetermined acute angle (α), said predetermined acute angle (α) being selected so as to minimise the extension in width of at least one of the projections (B,D,C,E) of said portions (5a,5b,5c,5d) on the retina (9) of the eye (2) of the user in a central or substantially central vision condition.

2. Method according to claim 1, wherein, in any section plane passing through said optical axis (A), said lower portion (5b) and at least one from said outer side portion (5a) and inner side portion (5c) are inclined, with respect to said optical axis (A), by said predetermined acute angle (α).

3. Method according to claim 2, wherein, in any section plane passing through said optical axis (A), both said outer side portion (5a) and said inner side portion (5c) are inclined, with respect to said optical axis (A), by said predetermined acute angle (α).

4. Method according to one of the previous claims, wherein said predetermined acute angle (α) is comprised between 25° and 80°.

5. Method according to the previous claim, wherein said predetermined acute angle (α) is comprised between 28° and 76°.

6. Method according to one of the previous claims, wherein the distance (K) between said inner surface (4) of the lens (1) and the centre of the pupil (7) of the user is comprised between 10 mm and 30 mm.

7. Method according to one of the previous claims, wherein the width (W) of the lens (1), measured in a horizontal plane passing through said optical axis (A) is comprised between 30 mm and 60 mm.

8. Method according to one of the previous claims, having a thickness, at said optical axis (A), comprised between 0.5 mm and 15 mm.

9. Method of production of an eyeglass frame (10), comprising at least one outer side segment (20) and at least one lower segment (30), each of which, observed in section, comprises a flank (12), a front edge (14) and/or a rear edge (16), said frame (10) being able to be associated with at least one respective lens (100) comprising an outer surface (3) and an inner surface (4), and defining a respective optical axis (A) that joins the centres of curvature of said outer surface (3) and inner surface (4), **characterised in that** in any section plane passing through said optical axis (A), at least one from said outer side segment (20) and lower segment (30) has the respective flank (12) inclined, with respect to said optical axis (A), by a predetermined acute angle (α), said predetermined acute angle (α) being selected so as to minimise the extension in width of at least one of the projections (B,C) of said segments (20,30) on the retina (9) of the eye (2) of the user in a central or substantially central vision condition.

10. Method according to claim 9, wherein, in any section plane passing through said optical axis (A), both said lower segment (30) and said outer side segment (20) are inclined, with respect to said optical axis (A), by said predetermined acute angle (α).

11. Method according to claim 10, comprising an inner side segment (40) comprising a respective flank (12), a front edge (14) and/or a rear edge (16), in any section plane passing through said optical axis (A), said flank (12) of said inner side segment (40) being inclined, with respect to said optical axis (A), by said predetermined acute angle (α).

12. Method according to one of claims 9-11, wherein said predetermined acute angle (α) is comprised between 25° and 80°.

13. Method according to claim 12, wherein said predetermined acute angle (α) is comprised between 28° and 76°.

14. Method according to one of claims 9-13, wherein the distance (K) between said inner surface (4) of said lens (100) and the centre of the pupil (7) of the user is comprised between 10 mm and 30 mm.

15. Method according to one of claims 9-14, wherein the width (W) of said frame (10) and/or of said lens (100), measured in a horizontal plane passing through said optical axis (A) is comprised between 30 mm and 60 mm.

## Patentansprüche

1. Verfahren zur Herstellung eines Brillenglases (1), das eine Außenfläche (3), eine Innenfläche (4) und einen Umfangsrand (5) umfasst, wobei der Umfangsrand (5) mindestens einen unteren Abschnitt (5b) und/oder mindestens einen äußeren Seitenabschnitt (5a) und/oder mindestens einen inneren Seitenabschnitt (5c) und/oder mindestens einen oberen Abschnitt (5d) umfasst, wobei eine optische Achse (A) des Brillenglases (1) vorgesehen ist, die die Krümmungsmittelpunkte der Außenfläche (3) und der Innenfläche (4) verbindet, **dadurch gekennzeichnet, dass** in jeder Schnittebene, die durch die optische Achse (A) verläuft, mindestens einer der äußeren Seitenabschnitte (5a), der inneren Seitenabschnitte (5c), der unteren Abschnitt (5b) und der oberen Abschnitt (5d) des Umfangsrandes (5) in Bezug auf die optische Achse (A) um einen vorbestimmten spitzen Winkel (α) geneigt ist, wobei der vorbestimmte spitze Winkel (α) so gewählt ist, dass die Breitenausdehnung mindestens eines der Vorsprünge (B, D, C, E) dieser Abschnitte (5a, 5b, 5c, 5d) minimiert wird auf der Netzhaut (9) des Auges (2) des Benutzers in einem zentralen oder im Wesentlichen zentralen Sehzustand.

2. Verfahren nach Anspruch 1, wobei in jeder Schnittebene, die durch die optische Achse (A) verläuft, der untere Abschnitt (5b) und mindestens einer der äußeren Seitenabschnitte (5a) und inneren Seitenabschnitte (5c) in Bezug auf die optische Achse (A) um den vorbestimmten spitzen Winkel (α) geneigt sind.

3. Verfahren nach Anspruch 2, wobei in jeder Schnittebene, die durch die optische Achse (A) verläuft, sowohl der äußere Seitenabschnitt (5a) als auch der innere Seitenabschnitt (5c) in Bezug auf die optische Achse (A) um den vorbestimmten spitzen Winkel (α) geneigt sind.

4. Verfahren nach einem der vorhergehenden Ansprüche, wobei der vorbestimmte spitze Winkel (α) zwischen 25° und 80° liegt.

5. Verfahren gemäß dem vorhergehenden Anspruch, wobei der vorbestimmte spitze Winkel (α) zwischen 28° und 76° liegt.

6. Verfahren nach einem der vorhergehenden Ansprüche, wobei der Abstand (K) zwischen der Innenfläche (4) des Brillenglases (1) und der Mitte der Pupille (7) des Benutzers zwischen 10 mm und 30 mm liegt.

7. Verfahren nach einem der vorhergehenden Ansprüche, wobei die Breite (W) des Brillenglases (1), gemessen in einer horizontalen Ebene, die durch die optische Achse (A) verläuft, zwischen 30 mm und 60 mm liegt.

8. Verfahren nach einem der vorhergehenden Ansprüche, mit einer Dicke an der optischen Achse (A), die zwischen 0,5 mm und 15 mm liegt.

9. Verfahren zur Herstellung eines Brillengestells (10), das mindestens ein äußeres Seitensegment (20) und mindestens ein unteres Segment (30) umfasst, die im Schnitt jeweils eine Flanke (12), eine Vorderkante (14) und/oder eine Hinterkante (16) aufweisen, wobei dem Gestell (10) mindestens ein Brillenglas (100) zugeordnet werden kann, das eine Außenfläche (3) und eine Innenfläche (4) umfasst und eine jeweilige optische Achse (A) definiert, die die Krümmungsmittelpunkte der Außenfläche (3) und der Innenfläche (4) verbindet, **dadurch gekennzeichnet, dass** in jeder Schnittebene, die durch die optische Achse (A) verläuft, bei mindestens einem der äußeren Seitensegmente (20) und der unteren Segmente (30) die jeweilige Flanke (12) in Bezug auf die optische Achse (A) um einen vorgegebenen spitzen Winkel (α) geneigt ist, wobei der vorgegebene spitze Winkel (α) so gewählt ist, dass die Breitenausdehnung mindestens einer der Projektionen (B, C) der Segmente (20, 30) auf der Netzhaut (9) des Auges minimiert wird (2) der Benutzer befindet sich in einem zentralen oder im Wesentlichen zentralen Sehzustand.

10. Verfahren nach Anspruch 9, wobei in jeder Schnittebene, die durch die optische Achse (A) verläuft, sowohl das untere Segment (30) als auch das äußere Seitensegment (20) in Bezug auf die optische Achse (A) um den vorbestimmten spitzen Winkel (α) geneigt sind.

11. Verfahren nach Anspruch 10, umfassend ein Innenseitensegment (40), das in einer durch die optische Achse (A) verlaufenden Schnittebene jeweils eine Flanke (12), eine Vorderkante (14) und/oder eine Hinterkante (16) umfasst, wobei die Flanke (12) des Innenseitensegments (40) in Bezug auf die optische Achse (A) um den vorgegebenen spitzen Winkel (α) geneigt ist.

12. Verfahren nach einem der Ansprüche 9 bis 11, wobei der vorbestimmte spitze Winkel (α) zwischen 25° und 80° liegt.

13. Verfahren nach Anspruch 12, wobei der vorbestimmte spitze Winkel (α) zwischen 28° und 76° liegt.

14. Verfahren nach einem der Ansprüche 9 bis 13, wobei der Abstand (K) zwischen der Innenfläche (4) des Brillenglases (100) und der Mitte der Pupille (7) des Benutzers zwischen 10 mm und 30 mm liegt.

15. Verfahren nach einem der Ansprüche 9 bis 14, wobei die Breite (W) des Rahmens (10) und/oder des Brillenglases (100), gemessen in einer horizontalen Ebene, die durch die optische Achse (A) verläuft, zwischen 30 mm und 60 mm liegt.

## Revendications

1. Procédé de fabrication d'un verre de lunettes (1) comprenant une surface extérieure (3), une surface intérieure (4) et un bord périphérique (5), ledit bord périphérique (5) comprenant au moins une partie inférieure (5b) et/ou au moins une partie latérale extérieure (5a) et/ou au moins une partie latérale intérieure (5c) et/ou au moins une partie supérieure (5d), dans lequel il est prévu qu'il y ait un axe optique (A) du verre (1) qui relie les centres de courbure desdites surfaces extérieure (3) et intérieure (4), ce procédé est **caractérisé en ce que,** dans tout plan de coupe passant par ledit axe optique (A), au moins l'une des parties latérales extérieure (5a), intérieure (5c), inférieure (5b) et supérieure (5d) dudit bord périphérique (5) est inclinée par rapport audit axe optique (A) d'un angle aigu prédéterminé (α), cet angle aigu prédéterminé (α) étant choisi de manière à minimiser l'extension en largeur d'au moins une des projections (B, D, C, E) dudit portions (5a, 5b, 5c, 5d) sur la rétine (9) de l'oeil (2) de l'utilisateur dans une condition de vision centrale ou sensiblement centrale.

2. Procédé selon la revendication 1, dans lequel, dans tout plan de coupe passant par ledit axe optique (A), ladite partie inférieure (5b) et au moins l'une desdites partie latérale extérieure (5a) et partie latérale intérieure (5c) sont inclinées, par rapport audit axe optique (A), dudit angle aigu prédéterminé (α).

3. Procédé selon la revendication 2, dans lequel, dans tout plan de coupe passant par ledit axe optique (A), à la fois ladite partie latérale extérieure (5a) et ladite partie latérale intérieure (5c) sont inclinées, par rapport audit axe optique (A), dudit angle aigu prédéterminé (α).

4. Procédé selon l'une des revendications précédentes, dans lequel ledit angle aigu prédéterminé (α) est compris entre 25° et 80°.

5. Procédé selon la revendication précédente, dans lequel ledit angle aigu prédéterminé (α) est compris entre 28° et 76°.

6. Procédé selon l'une des revendications précédentes, dans lequel la distance (K) entre ladite surface intérieure (4) du verre (1) et le centre de la pupille (7) de l'utilisateur est comprise entre 10 mm et 30 mm.

7. Procédé selon l'une des revendications précédentes, dans lequel la largeur (W) du verre (1), mesurée dans un plan horizontal passant par ledit axe optique (A), est comprise entre 30 mm et 60 mm.

8. Procédé selon l'une des revendications précédentes, présentant une épaisseur, au niveau dudit axe optique (A), comprise entre 0,5 mm et 15 mm.

9. Procédé de fabrication d'une monture de lunettes (10), comprenant au moins un segment latéral extérieur (20) et au moins un segment inférieur (30), chacun d'eux, observé en coupe, comprenant un flanc (12), un bord avant (14) et/ou un bord arrière (16), ladite monture (10) pouvant être associée à au moins un verre (100) respectif comprenant une surface extérieure (3) et une surface intérieure (4), et définissant un axe optique (A) respectif reliant les centres de courbure desdites surfaces extérieure (3) et intérieure (4), ce procédé est **caractérisé en ce que,** dans tout plan de coupe passant par ledit axe optique (A), au moins l'un des segments latéral extérieur (20) et inférieur (30) présente un flanc (12) incliné par rapport audit axe optique (A) d'un angle aigu prédéterminé (α), cet angle aigu prédéterminé (α) étant choisi de manière à minimiser l'extension en largeur d'au moins une des projections (B, C) desdits segments (20, 30) sur la rétine (9) de l'oeil (2) de l'utilisateur dans une condition de vision centrale ou sensiblement centrale.

10. Procédé selon la revendication 9, dans lequel, dans tout plan de coupe passant par ledit axe optique (A), à la fois ledit segment inférieur (30) et ledit segment latéral extérieur (20) sont inclinés, par rapport audit axe optique (A), dudit angle aigu prédéterminé (α).

11. Procédé selon la revendication 10, comprenant un segment latéral interne (40) comprenant un flanc (12), un bord avant (14) et/ou un bord arrière (16) respectifs, dans tout plan de coupe passant par ledit axe optique (A), ledit flanc (12) dudit segment latéral interne (40) étant incliné, par rapport audit axe optique (A), dudit angle aigu prédéterminé (α).

12. Procédé selon l'une des revendications 9 à 11, dans lequel ledit angle aigu prédéterminé (α) est compris entre 25° et 80°.

13. Procédé selon la revendication 12, dans lequel ledit angle aigu prédéterminé (α) est compris entre 28° et 76°.

14. Procédé selon l'une des revendications 9 à 13, dans lequel la distance (K) entre ladite surface intérieure (4) du dite verre (100) et le centre de la pupille (7) de l'utilisateur est comprise entre 10 mm et 30 mm.

15. Procédé selon l'une des revendications 9 à 14, dans lequel la largeur (W) de ladite monture (10) et/ou du dite verre (100), mesurée dans un plan horizontal passant par ledit axe optique (A), est comprise entre 30 mm et 60 mm.
